# EUROPEAN PATENT APPLICATION

(11) **EP 3 285 224 A1**
(43) Date of publication of application: **21.02.2018**
(21) Application number: 15889138.2
(22) Date of filing: 13.04.2015
(51) Int. Cl.: G06Q 50/00

(54) **EXPERIMENTAL DATA RECORDING DEVICE, COMPUTER PROGRAM, EXPERIMENTAL DATA, EXPERIMENTAL DATA RECORDING METHOD, EXPERIMENTAL DATA DISPLAY DEVICE AND EXPERIMENTAL DATA DISPLAY METHOD**

(71) Applicant: National Institute of Advanced Industrial Science and Technology, Tokyo 100-8921 (JP); Kabushiki Kaisha Yaskawa Denki, Kitakyushu-shi, Fukuoka 806-0004 (JP); Robotic Biology Institute Inc., Meguro-ku, Tokyo 152-0022 (JP)
(72) Inventor: NATSUME, Toru, Tokyo 135-0064 (JP); MATSUKUMA, Kenji, Kitakyushu-shi Fukuoka 806-0004 (JP); UMENO, Makoto, Kitakyushu-shi Fukuoka 806-0004 (JP); IPPOSHI, Tatsuro, Kitakyushu-shi Fukuoka 806-0004 (JP)
(74) Representative: Grünecker Patent- und Rechtsanwälte PartG mbB
(86) International application number: PCT/JP2015/061389
(87) International publication number: WO 2016/166800

(57) **Abstract**

Provided is an experimental data recording device (1), configured to record experimental data, which is a record of an experiment based on a protocol in at least one of a biochemistry field or a biotechnology field, the experimental data recording device including: a reception unit (21) configured to receive operation records of pieces of experiment equipment; an experiment ID recording unit (12) configured to record an experiment ID, which is an ID unique to an experiment, in association with a protocol ID unique to a protocol; and an operation record recording unit (25) configured to record each of the received operation records in association with a corresponding procedure out of a plurality of procedures included in the protocol.

## Description

### Technical Field

The present invention relates to an experimental data recording device, a computer program, experimental data, an experimental data recording method, an experimental data display device, and an experimental data display method.

### Background Art

An experiment in biochemistry, biotechnology, or a similar field (means a series of tests, cultivation, amplification, or other types of operation performed on a sample) needs to be recorded in a manner that can verify that the experiment is conducted exactly by preset procedures and under preset conditions in order to evaluate the result of the experiment correctly. Work procedures and conditions in an experiment are commonly and customarily called a protocol. Whether or not an experiment has been conducted exactly as a protocol dictates is determined by relying on experiment notes taken by each experimenter.

### Technical Problem

An object of the present invention is to record an experiment that is based on a protocol with objectivity and high reliability.

### Solution to Problem

According to one aspect of the present invention, there is provided an experimental data recording device, configured to record experimental data, which is a record of an experiment based on a protocol in at least one of a biochemistry field or a biotechnology field, the experimental data recording device including: a reception unit configured to receive operation records of pieces of experiment equipment; an experiment ID recording unit configured to record an experiment ID, which is an ID unique to an experiment, in association with a protocol ID unique to a protocol; and an operation record recording unit configured to record each of the received operation records in association with a corresponding procedure out of a plurality of procedures included in the protocol.

Further, the experimental data recording device according to the one aspect of the present invention may further include a target sample ID recording unit configured to record a target sample ID, which is an ID of a sample for which the experiment is conducted, in association with the experiment ID; and a resultant sample ID recording unit configured to record a resultant sample ID, which is an ID of a sample obtained as a result of the experiment, in association with the experiment ID.

Further, the experimental data recording device according to the one aspect of the present invention may further include an experiment environment data recording unit configured to record experiment environment data in association with the experiment ID.

Further, in the experimental data recording device according to the one aspect of the present invention, the pieces of experiment equipment may include equipment operated directly by an experimenter.

Further, in the experimental data recording device according to the one aspect of the present invention, the pieces of experiment equipment may include an electronic pipette.

Further, the experimental data recording device according to the one aspect of the present invention may further include a mid-experiment protocol display unit configured to display the protocol relevant to the experiment on a monitor during the experiment.

Further, in the experimental data recording device according to the one aspect of the present invention, the pieces of experiment equipment may include a robot configured to conduct the experiment based on the protocol.

Further, the experimental data recording device according to the one aspect of the present invention may further include an experiment ID issuing unit configured to issue the experiment ID for each experiment.

Further, in the experimental data recording device according to the one aspect of the present invention, the experiment ID issuing unit may be configured to obtain an experiment ID that is generated by an external experiment ID generation device.

Further, the experimental data recording device according to the one aspect of the present invention may further include an anti-tampering unit configured to perform anti-tampering processing on the experimental data.

Further, in the experimental data recording device according to the one aspect of the present invention, the anti-tampering unit may be configured to perform the anti-tampering processing at least each time the operation record recording unit records an operation record.

Further, the experimental data recording device according to the one aspect of the present invention may further include an experimental data housing unit configured to store the obtained experimental data in an external experimental data storage device.

Further, the experimental data recording device according to the one aspect of the present invention may further include an analysis data recording unit configured to record analysis data, which is data about a result of analysis performed on a sample that is obtained as a result of the experiment, in association with a resultant sample ID of the obtained sample.

Further, the experimental data recording device according to the one aspect of the present invention may further include: a post-experiment protocol display unit configured to display a protocol that is used in the experiment; and an operation record display unit configured to display each operation record included in the experimental data that is associated with the protocol, in association with one of procedures included in the protocol.

Further, a computer program according to another aspect of the present invention causes a computer to function as any one of the above-mentioned operation command generation devices.

Further, according to another aspect of the present invention, there is provided experimental data, which is a record of an experiment based on a protocol in at least one of a biochemistry field or a biotechnology field, the experimental data including: an experiment ID, which is an ID unique to an experiment and which is associated with a protocol ID unique to a protocol; and operation records of pieces of experiment equipment, each of the operation records being associated with a corresponding procedure out of procedures included in the protocol.

According to another aspect of the present invention, there is provided an experimental data recording method for recording experimental data, which is a record of an experiment based on a protocol in at least one of a biochemistry field or a biotechnology field, the experimental data recording method including: receiving operation records of pieces of experiment equipment; recording an experiment ID, which is an ID unique to an experiment, in association with a protocol ID unique to a protocol; and recording each of the received operation records in association with a corresponding procedure out of a plurality of procedures included in the protocol.

Further, according to another aspect of the present invention, there is provided an experimental data display device, configured to display experimental data, which is a record of an experiment based on a protocol in at least one of a biochemistry field or a biotechnology field, the experimental data display device including: a post-experiment protocol display unit configured to display a protocol that is used in the experiment; and an operation record display unit configured to display each operation record included in the experimental data that is associated with the protocol, in association with one of procedures included in the protocol, the operation record being about experiment equipment used in the experiment.

Further, the experimental data display device according to another aspect of the present invention may further include an analysis data display unit configured to display analysis data that is associated with the experimental data.

Further, according to another aspect of the present invention, there is provided an experimental data display method for displaying experimental data, which is a record of an experiment based on a protocol in at least one of a biochemistry field or a biotechnology field, the experimental data display method including: displaying a protocol that is used in the experiment; and displaying each operation record included in the experimental data that is associated with the protocol, in association with one of procedures included in the protocol, the operation record being about experiment equipment used in the experiment.

### Brief Description of Drawings

FIG. 1 is a block diagram for illustrating the physical configuration of an experimental data recording device according to an embodiment of the present invention.
FIG. 2 is a function block diagram of the experimental data recording device according to the embodiment of the present invention.
FIG. 3 is a diagram for illustrating an example of a protocol.
FIG. 4 is a conceptual diagram for illustrating the entire experiment system including the experimental data recording device.
FIG. 5 is a diagram for illustrating an example of how experimental data is displayed superimposed on a protocol chart.
FIG. 6 is a flow chart for illustrating the operation of the experimental data recording device that is executed to record experimental data.
FIG. 7 is a flow chart for illustrating the operation of the experimental data recording device that is executed to display experimental data superimposed on a protocol chart.
FIG. 8 is a function block diagram of an experimental data recording device according to a modification example of the embodiment of the present invention.
FIG. 9 is a function block diagram of an experimental data display device.

### Description of Embodiments

According to the viewpoints of the inventors of the present invention, a record of an experiment in the form of experiment notes can be subjective and has room for human errors on the part of an experimenter, and verification of the result of an important experiment requires immense time and labor in some cases. In addition, demanding experiment notes to be an accurate and adequate record burdens an experimenter, and can cause a drop in the work efficiency of an experiment and the productivity of research activity itself.

Therefore, the inventors of the present invention have invented a novel and creative experimental data recording device and the like as a result of performing extensive research and development into recording the record of an experiment that is based on a protocol with objectivity and high reliability. This experimental data recording device and the like are described below in detail by way of an embodiment of the present invention with reference to the drawings.

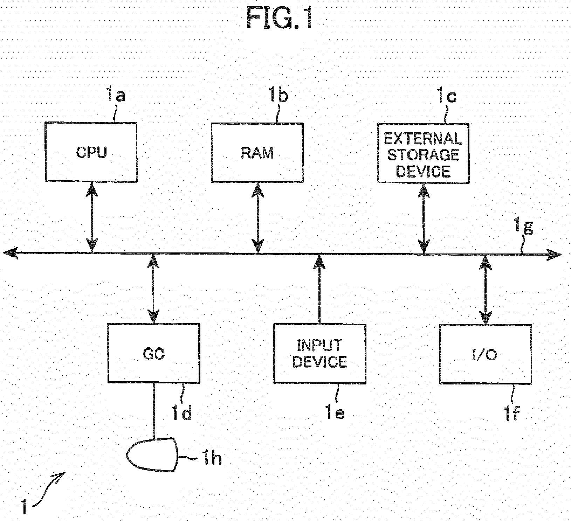

FIG. 1 is a block diagram for illustrating the physical configuration of an experimental data recording device 1 according to the embodiment of the present invention. The experimental data recording device 1 itself may be a dedicated device. However, in this case, the experimental data recording device 1 is implemented by using a common computer. In other words, a commercially-available computer configured to execute a computer program for causing the computer to operate as the experimental data recording device 1 is used for the experimental data recording device 1. The computer program is in general provided in the form of application software, and is used when installed on the computer. The application software may be provided by recording the application software on a compact disc read-only memory (CD-ROM), a digital versatile disc (DVD) ROM, or another suitable computer-readable information recording medium. Further, the application software may be provided over various information communication networks, such as the Internet. In addition, the functions of the application software may be provided by a server at a remote location over an information communication network, that is, may be implemented by so-called cloud computing.

The configuration illustrated in FIG. 1 is a general computer used as the experimental data recording device 1. In the computer, a central processing unit (CPU) 1a, a random access memory (RAM) lb, an external storage device lc, a graphics controller (GC) 1d, an input device 1e, and an input/output (I/O) 1f are connected to one another by a data bus 1g so that the devices can exchange electric signals therebetween. In this case, the external storage device 1c is a device capable of statically recording information, for example, a hard disk drive (HDD) or a solid state drive (SSD). Further, signals from the GC 1d are output and displayed as an image on a monitor 1h, for example, a flat panel display, which allows the user to visually recognize the image. The input device le is a device, for example, a keyboard, a mouse, or a touch panel, which allows the user to input information. The I/O 1f is an interface that allows the experimental data recording device 1 to exchange information with an external device.

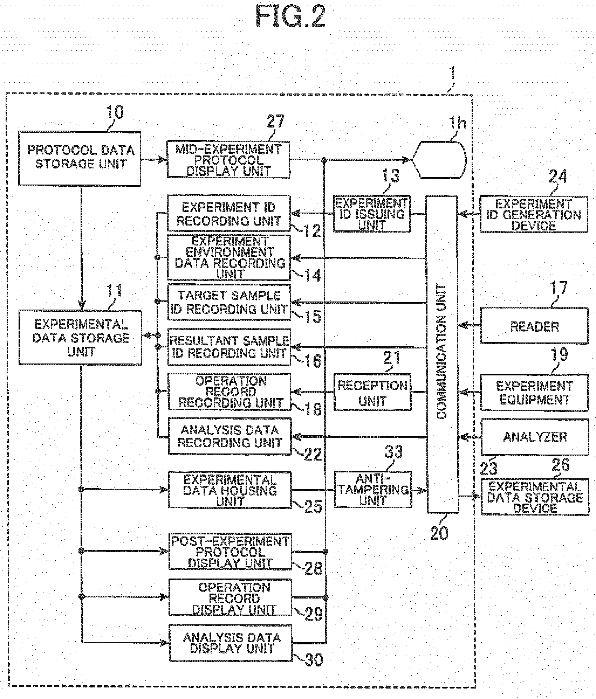

FIG. 2 is a function block diagram of the experimental data recording device 1 according to this embodiment. The function blocks illustrated in FIG. 2 focus on the functions of the experimental data recording device 1. The experimental data recording device 1 does not necessarily have physical components that correspond to respective function blocks on a one-to-one basis. Some function blocks are implemented by an information processing device, for example, the CPU 1a of the experimental data recording device 1, executing specific software. Further, some function blocks are implemented by a specific storage area being allocated to an information storage device, for example, the RAM 1b of the experimental data recording device 1.

The experimental data recording device 1 includes a protocol data storage unit 10 configured to store protocol data, which is electronic data representing a protocol, and an experimental data storage unit 11 configured to store experimental data, in order to record experimental data obtained in an experiment in association with protocol data that represents a protocol on which the experiment is based. The term protocol means work procedures and conditions of pretreatment or other types of operation performed on a sample in biochemistry, biotechnology, or a similar field. A protocol is written so that a given experiment is conducted by executing individual procedures that are included in the protocol under specified conditions in a specified order. A person who conducts or plans an experiment in biochemistry, biotechnology, or a similar field (not limited to experiments in the narrow sense but includes performing given treatment on a sample or a reagent by specific procedures, and the act of production and manufacture is also included) writes a protocol usually for the purpose of, for example, conducting the experiment as planned or recording and conveying details of the experiment. A protocol here is therefore not limited to any particular form of description as long as at least one work procedure or others are included. The number, quality, details, and the like of work procedures included in a protocol depend on the intention of a person who creates the protocol, and are accordingly not limited as well. The technical field in which a protocol here is used is not limited to biochemistry and biotechnology. In the present application, however, the technical field includes at least one of biochemistry and biotechnology. Protocol data of a protocol includes a protocol ID, which is information used to uniquely identify the protocol, and procedure data, which represents each procedure included in the protocol. Experimental data means various types of information about an experiment based on a protocol, for example, the experiment itself, various conditions of the experiment, and operation records of various pieces of equipment used in the experiment. In particular, experimental data of an experiment includes an experiment ID, which is information used to uniquely identify the experiment itself, and operation records of various pieces of equipment used in the experiment.

The protocol data storage unit 10, or a protocol server 32, which is described later, or both may store one or more pieces of protocol data associated with a protocol ID, and may have functions similar to those of a common database, for example, the function of identifying protocol data from a protocol ID.

The experimental data recording device 1 includes various recording units configured to record, in an experiment, various types of information that are included in experimental data. An experiment ID recording unit 12 is configured to record, when an experiment is conducted, an experiment ID as experimental data in the experimental data storage unit 11 in association with a protocol ID. The association specifically indicates that an experiment identified from an experiment ID has been conducted based on a protocol identified from a protocol ID by including the protocol ID and the experimental ID both in experimental data. Alternatively, protocol data itself may be added to experimental data. An experimental ID is issued for each experiment by an experiment ID issuing unit 13.

The experimental data storage unit 11, or an experimental data storage device 26, which is described later, or both may store one or more pieces of experimental data associated with a protocol ID and an experiment ID, and may have functions similar to those of a common database, for example, the function of identifying experimental data from an experiment ID and the function of identifying experimental data from a protocol ID.

The experiment ID issuing unit 13 may be configured to generate an experiment ID on its own, or may be configured to obtain an experiment ID that is generated by an external experiment ID generation device 24 connected via a communication unit 20. Experiment IDs that are unique throughout separate experimental data recording devices 1 can be issued while avoiding duplication by installing the experiment ID generation device 24 as a Web server that is communicable over the Internet or other telecommunication lines and that is shared by a plurality of experimental data recording devices 1. The uniqueness of each experiment ID may instead be ensured by putting some kind of restriction on experiment IDs issued by the experiment ID issuing unit 13, for example, using an ID that is set uniquely to each experimental data recording device 1 as part of an experiment ID. In any case, an experiment ID is issued as an ID unique to each experiment, and various types of information described below as information included in experimental data are recorded in association with the unique experiment ID. As such, it is clearly recorded that which experiment is associated with these various types of information.

An experiment environment data recording unit 14 is configured to record experiment environment data about an experiment in the experimental data recording unit 11 as experiment data. Experiment environment data is data indicating conditions about an experiment itself, and includes at least data that indicates one of an experimenter, an experiment location, an experiment date/time, and experiment equipment. The experimenter is information used to identify a person who has conducted the experiment himself/herself or a person who is in charge of the experiment. The experiment location is information used to identify a place, for example, a building or a room in which the experiment has been conducted, or a booth number. The experiment date/time is information used to identify a date/time at which the experiment has been conducted, and may include a time at which the experiment has started and, additionally, a time at which the experiment has ended. The data indicating experiment equipment is information used to identify pieces of experiment equipment that have been used in the experiment. For example, when experiment equipment that is used is an electronic pipette as described later, an ID unique to the electronic pipet, for example, a serial number, qualifies as information for identifying a piece of experiment equipment. When an experiment uses a plurality of pieces of experiment equipment, for example, a plurality of electronic pipettes or an electronic pipette plus a microscope, all IDs unique to the respective pieces of experiment equipment may be included in experiment environment data as data that indicates experiment equipment. Experiment environment data, along with other types of data, can be utilized as important data indicating that an experiment has been conducted authentically.

A target sample ID recording unit 15 is configured to record a target sample ID, which is information used to identify a sample that has been employed in an experiment, in the experimental data storage unit 11 as experimental data. A resultant sample ID recording unit 16 is configured to record, as experimental data in the experimental data storage unit 11, a resultant sample ID, which is information used to identify an experiment result sample that is obtained as a result of performing various types of operation on a sample employed in an experiment. A target sample used in an experiment and a resultant sample obtained as a result of the experiment can be identified correctly in this manner. The target sample ID and the resultant sample ID can be, for example, container identification information that is attached to a test tube, a petri dish, or a similar container in which a sample is contained and that is read by a reader 17.

An operation record recording unit 18 is configured to record operation records of various pieces of equipment used in an experiment as experimental data in the experimental data storage unit 11. An operation record is a record of the operation of a piece of experiment equipment 19 used in an experiment, and is received by a reception unit 21 via the communication unit 20. A specific example of the operation record is described later. The operation record recording unit 18 stores each of operation records, which are for recording that individual procedures included in a protocol have actually been executed with the use of specific pieces of experiment equipment 19, in association with a corresponding piece of procedure data in protocol data. Which operation record included in experimental data is associated with which one of a plurality of procedures included in a protocol can be identified in this manner.

An analysis data recording unit 22 is configured to record, after an experiment is finished, as experimental data in the experimental data storage unit 11, analysis data, which is information obtained by analyzing a resultant sample with the use of an external analyzer 23. The analysis data recording unit 22 records the analysis data in association with a resultant sample ID in order to identify the sample analyzed by the analyzer 23. The analysis data may include, in addition to information about the analyzed sample, information about the environment of the analysis, for example, an ID for identifying the analyzer used in the analysis, and information indicating various analysis conditions and the date/time of the analysis. This means that not only the facts of an experiment but also the obtained result can be evaluated from experimental data. This also means that, because each resultant sample ID is associated with an experiment ID, the analysis data is associated with an experiment ID as well.

An experimental data housing unit 25 is configured to store, in the external experimental data storage device 26, via the communication unit 20, the pieces of experimental data that are recorded by the respective recording units described above and that are stored in the experimental data storage unit 11. When the experimental data storage device 26 is installed as a Web server communicable over the Internet or other telecommunication lines, the stored experimental data can be viewed on devices other than the experimental data recording device 1, and can also be viewed by people other than the experimenter. In order to secure the confidentiality of experimental data and to control who is allowed to view experimental data, experimental data stored in the experimental data storage device 26 may be password-protected, or the viewing of the experimental data may be limited to people who have an associated viewing authorization by putting a viewing restriction on the experimental data. At the time the experimental data is stored by the experimental data housing unit 25, it is recommended to perform suitable anti-tampering processing on the experimental data through an anti-tampering unit 33. The anti-tampering unit 33 is configured to prevent the tampering of electronic data by performing known anti-tampering processing on experimental data, for example, attaching an electronic certificate or attaching a hash value that is calculated from an undisclosed hash function. In this manner, artificial manipulation of experimental data and data corruption can be detected, and the reliability and accuracy of experimental data are maintained.

The communication unit 20 is configured to hold telecommunication between the experimental data recording device 1 and various external devices. The communication unit 20 is implemented by the I/O 1f of FIG. 1, and is not limited by whether the communication is cable communication or wireless communication and by what communication standards are used. The communication unit 20 particularly holds communication to and from each piece of experiment equipment 19, and causes the reception unit 21 to receive an operation record of the equipment 19.

A mid-experiment protocol display unit 27 is configured to display, on the monitor 1h, during an experiment, a protocol that is used in the experiment based on protocol data stored in the protocol data storage unit 10. This allows an experimenter who conducts an experiment by directly operating the experiment equipment 19 to operate the equipment while checking a protocol. Examples of the type of experiment equipment 19 that is to be operated directly by an experimenter include electronic pipettes and microscopes. When the experiment equipment 19 is a robot and a robot control device conducts an experiment automatically by interpreting protocol data, the mid-experiment protocol display unit 27 allows an experimenter who observes the experiment to check which operation included in the protocol is being performed by the robot.

A post-experiment protocol display unit 28 is configured to display on the monitor 1h a protocol used in an experiment, based on protocol data that is stored in the protocol data storage unit 10, or protocol data that is included in experimental data stored in the experimental data storage unit 11. An operation record display unit 29 is configured to display operation records at once on the monitor 1h in association with respective procedures that are included in a protocol displayed on the monitor 1h, based on experimental data stored in the experimental data storage unit 11. Displaying a protocol and experimental data on the monitor 1h by displaying individual procedures in association with operation records in this manner enables a viewer to immediately grasp how each individual procedure included in the experiment has actually been executed. Analysis data obtained from the external analyzer 23 is further displayed on the monitor 1h by an analysis data display unit 30 in association with a resultant sample obtained through the experiment. In this manner, a protocol on which an experiment is based, the history of the experiment, and analysis data obtained as a result of the experiment are displayed in association with one another and, because the displayed pieces of information are associated with one another, a record of the experiment based on the protocol is presented with objectivity and high reliability. The record, which is automatically recorded by the experimental data recording device 1, also frees an experimenter from an additional burden that is put by a demand to take detailed experiment notes as a record of an experiment.

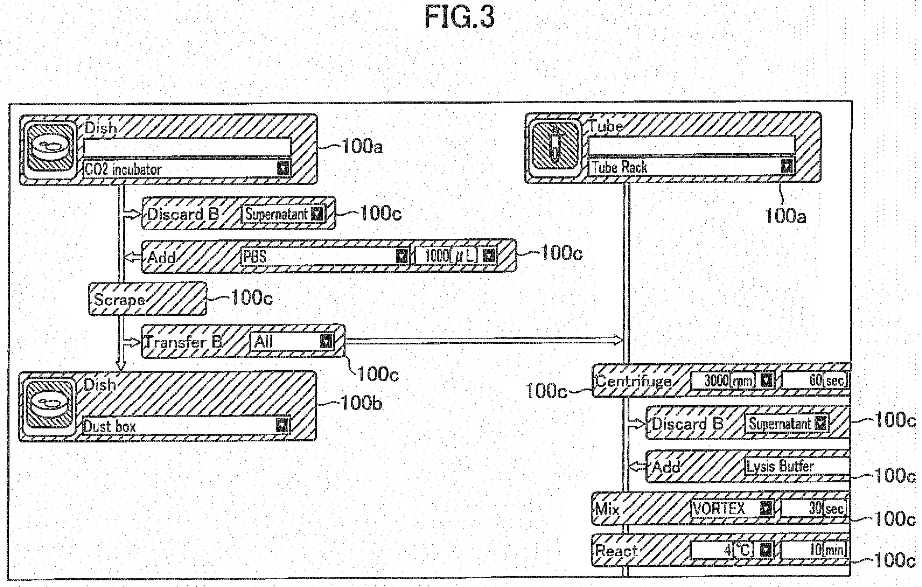

FIG. 3 is a diagram for illustrating an example of a protocol that is displayed on the monitor 1h by the display unit 27 or the protocol display unit 28. As illustrated in FIG. 3, a protocol is displayed in a chart format, where procedures included in the protocol, the order of executing the procedures, conditions, and pieces of equipment used in the experiment are shown clearly. A protocol displayed in a chart format is hereinafter referred to as "protocol chart". The protocol chart illustrated in FIG. 3 is a part of the whole protocol chart.

To give a more detailed description, the protocol chart of this example displays procedures for each container that contains a sample used in the experiment and that is used to perform various types of operation on the sample, with the procedures arranged vertically from top to bottom. The containers used in the experiment are displayed side by side, and it is clearly indicated that a series of procedures along the vertical axis are performed on one container in order.

Each container is represented by a symbol 100a, which indicates the initial state of the container, and a symbol 100b, which indicates the final state of the container. The flow of the container, or a sample contained in the container, is indicated by a vertical arrow that starts from the container symbol 100a and points toward the container symbol 100b. A procedure performed on the container or the sample contained in the container, is illustrated by a symbol 100c, which represents each individual procedure. Each individual procedure is displayed in a visual manner that enables what the procedure is like to be understood easily, by displaying an arrow that branches out of the vertical arrow when the procedure is the operation of taking the content out of the container (for example, "discard", which means discarding the content), by displaying an arrow that merges into the vertical arrow when the procedure is the operation of adding something to the content of the container (for example, "add", which means adding a reagent or a similar substance), and by placing the symbol 100c on the vertical arrow when the procedure is operation that involves the container alone (for example, "scrape", which means scraping a cell or "centrifuge", which means centrifugal separation). Conditions including which reagent is to be used in what amount are displayed in each symbol 100c. The order in which procedures are executed in an experiment is determined by places in the arrangement of symbols . Specifically, a symbol at an upper place is given priority in the execution order over a symbol at a lower place, and a symbol on the left is given priority in the execution order over a symbol on the right when the symbols are displayed at the same level. The order of executing procedures is thus also displayed as a unique order.

Protocol data stored in the protocol data storage unit 10 includes a protocol ID uniquely assigned to a protocol as the one illustrated in FIG. 3, and procedure data representing procedures that are included in the protocol. Procedure data is pieces of data that correspond to the individual symbols illustrated in FIG. 3. The mid-experiment protocol display unit 27 interprets protocol data defined as above, and displays a protocol chart on the monitor 1h in the mode illustrated in FIG. 3. The protocol chart illustrated in FIG. 3 is an example, and a different format may be used to display a protocol as a format for representing the protocol. However, the employed format at least needs to display each individual procedure included in a protocol independently and clearly.

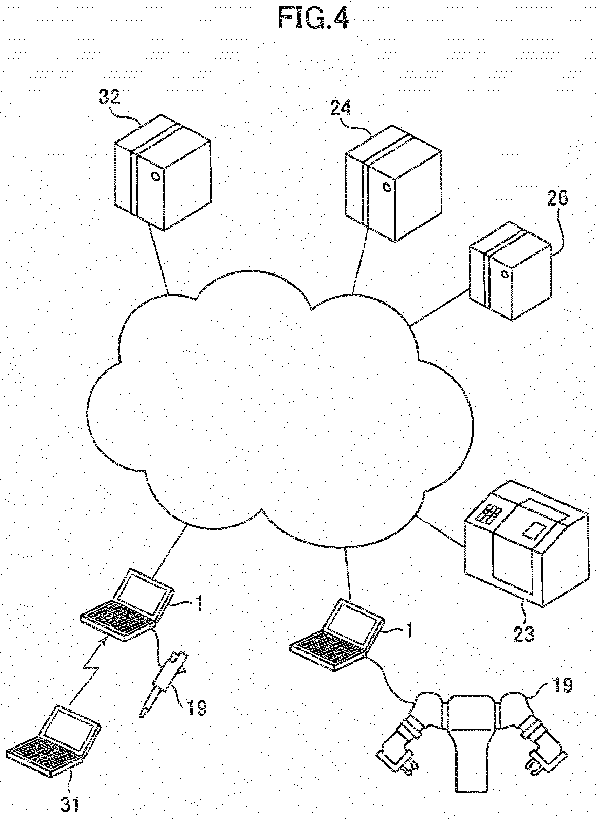

FIG. 4 is a conceptual diagram for illustrating the entire experiment system including the experimental data recording device 1. In FIG. 4, various devices are connected to a wide-area telecommunication line, typically the Internet, in a manner that allows the devices to hold communication among one another.

An electronic pipette, which is a piece of equipment operated directly by an experimenter, is connected as an example of the experiment equipment 19 to the experimental data recording device 1 that is illustrated in a lower left part of FIG. 4, in order to record on the experimental data recording device 1 an experiment conducted by the experimenter. Protocol data that is created by a separately prepared protocol creation device 31 (alternatively, the experimental data recording device 1 may double as a protocol creation device) may be read into the experimental data recording device 1.

An automatic device, which is a general-purpose robot in this case, is connected as an example of the pieces of experiment equipment 19 to the experimental data recording device 1 that is illustrated in a lower right part of FIG. 4, in order to conduct an experiment based on protocol data by automatic control of the robot, and to record the experiment on the experimental data recording device 1. Protocol data that is accumulated in the protocol server 32, which is a server connected via the telecommunication line, is downloaded to this experimental data recording device 1. Based on the downloaded protocol data, the experiment is recorded and the robot may be controlled. The protocol server 32 may accumulate not only protocol data that is created by an experimenter who takes the leading part in the experiment, but also many pieces of protocol data created by the third party. This enables a researcher to easily replicate an experiment conducted by another researcher, to conduct a new experiment by utilizing a protocol that is created by another researcher, and to otherwise make full use of protocols as soft asset.

The analyzer 23, the experiment ID generation device 24, the experimental data storage device 26, and other devices may also be connected to the telecommunication line in a manner that allows the devices to hold communication to and from each experimental data recording device 1. The additionally connected devices are as described above.

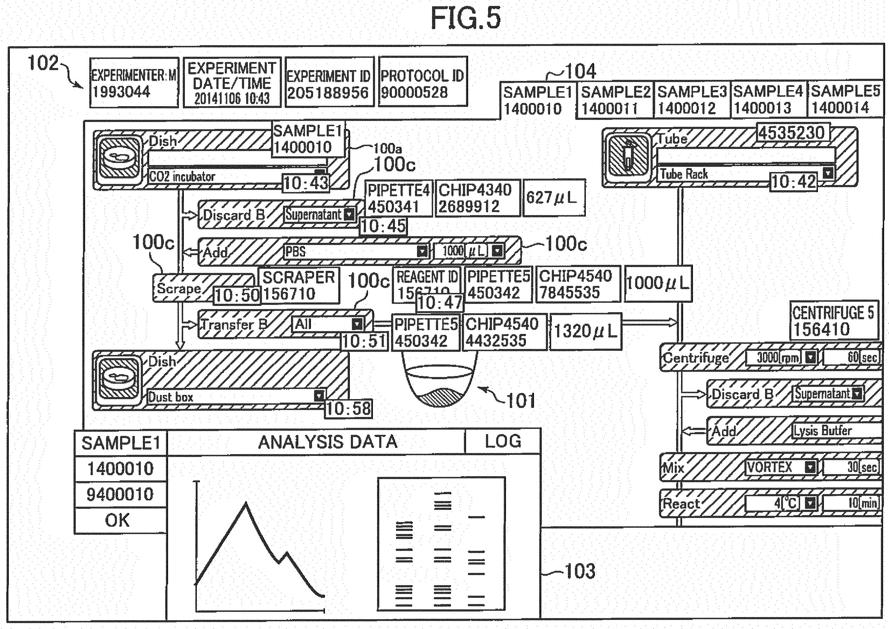

Through the experiment system described above, experimental data collected and recorded by each experimental data recording device 1 is displayed superimposed on a protocol chart on the monitor 1h of the experimental data recording device 1 by the post-experiment protocol display unit 28, the operation record display unit 29, and the analysis data display unit 30, which are illustrated in FIG. 2, in response to a request from a user or other triggers . FIG. 5 is a diagram for illustrating an example of how experimental data is displayed superimposed on a protocol chart.

The post-experiment protocol display unit 28 displays a protocol chart on the monitor 1h in a manner mostly similar to that of the mid-experiment protocol display unit 27 described above. Here, the same protocol chart as the one illustrated in FIG. 3 is displayed in FIG. 5, and FIG. 5 is similar to FIG. 3 also in that a protocol is represented by various symbols 100.

The operation record display unit 29 displays operation records included in experimental data in the vicinity of the respective symbols on the protocol chart. An operation record and a procedure included in the protocol are displayed in association with each other in this manner. In the example of FIG. 5, a target sample name ("Sample 1") and its target sample ID ("1400010"), and a time at which the sample has been prepared are displayed near the upper left symbol 100a. The name of a piece of experiment equipment used ("Pipette 4") and the equipment's ID ("450341"), which chip has been used and the chip's ID ("Chip 4340" and "2689912"), an actually measured value of the amount of liquid suctioned and discarded ("627 µL"), and a time at which the procedure has been executed are displayed near the symbol 100c immediately below the upper left symbol 100a. Similarly, the ID of a reagent used ("156710") and a time are displayed near the symbol 100c that is below the symbol 100c immediately below the upper left symbol 100a, and the individual number of a scraper used ("156710") and a time are displayed near the symbol 100c that is further below the former symbol 100c. The operation record display unit 29 displays operation records of pieces of experiment equipment in association with individual procedures in this manner, and the displayed operation records each include, among others, what equipment, consumption article, or reagent has been used, a time, and an operation-related amount (the dose or the length of time).

The symbol 100c yet further below instructs the transfer of the sample between containers . A photograph of an actual sample taken during the experiment or other images, a temperature, pH, or other physical quantities measured during the experiment, and the like may additionally be displayed as part of an operation record, as indicated by a reference symbol 101. This enables a viewer to confirm that an experiment based on a protocol has actually been conducted, and to keep track of, in detail, how each procedure has been executed and how a sample has changed in the process.

As indicated by a reference symbol 102 above the protocol, various pieces of experiment environment data may be displayed along with the experiment ID and the protocol ID. This ensures that the situation in which the experiment has been conducted, for example, when and by whom the experiment has been conducted, is checked with accuracy.

Analysis data is further displayed on the monitor 1h by the analysis data display unit 30 along with the protocol chart and the experimental data as indicated by a reference symbol 103. This analysis data display format, which is given as an example, indicates that the displayed data is analysis data about Sample 1, which has a target sample ID "1400010", that the resultant sample ID of the analyzed resultant sample is "9400010", and that the result of the analysis has been determined by some standards as "OK" (for example, determined that the experiment result is reliable). In this example, more detailed information (more exact numerical values and the like) of the experimental data is displayed in place of the analysis data by selecting a section to the upper right of the displayed analysis data in which "LOG" is written.

When a series of experiments based on the same protocol is conducted on a plurality of target samples, the screen may switch from the display of data about one target sample to the display of data about another target sample. In the example of FIG. 5, tabs 104 are displayed to the upper right of the protocol chart, and experimental data and analysis data of a target sample to be viewed are displayed out of pieces of experimental data and analysis data that are created for each target sample separately, by selecting a tab that is associated with the target sample ID of the target sample to be viewed. Pieces of analysis data about a plurality of target samples may be displayed superimposed on each other for comparison. The screen may switch from data about one resultant sample to data about another resultant sample, instead of data about target samples.

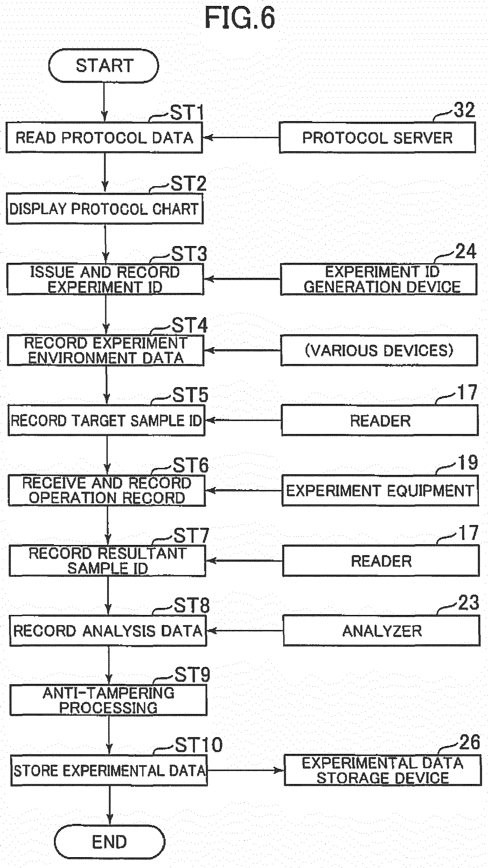

FIG. 6 is a flow chart for illustrating the operation of the experimental data recording device 1 that is executed to record experimental data. This flow is given as an example, and not all of the operation steps illustrated in FIG. 6 are required to be executed.

In Step ST1, protocol data is first downloaded to the protocol data storage unit 10 from the protocol server 32 or other places to be read. The read protocol data includes a protocol ID and procedure data.

In Step ST2, the display unit 27 displays a protocol chart based on the read protocol data.

In Step ST3, the experiment ID issuing unit 13 issues an experiment ID, and the experiment ID recording unit 12 records this experiment ID. The experiment ID issuing unit 13 issues an experiment ID by, for example, causing the experiment ID generation device 24 to generate an experiment ID.

In Step ST4, the experiment environment data recording unit 14 collects necessary information from various devices, and records the collected information. The devices here vary depending on what information is necessary as experiment environment data. For example, an ID card reader is included among the devices when the experimenter ID is necessary information, and a piece of experiment equipment itself is included among the devices when the ID of experiment equipment used in the experiment is necessary information.

In Step ST5, the target sample ID recording unit 15 records the ID of a target sample used in the experiment. The target sample ID may be read by, for example, the reader 17.

In Step ST6, the reception unit 21 receives operation records of the experiment equipment 19 used in the experiment, and the operation record recording unit 18 records the operation records. The operation records are recorded for the respective procedures included in the protocol, while the procedures are executed. Each operation record collected is recorded in association with a corresponding one of the procedures included in the protocol.

In Step ST7, the resultant sample ID recording unit 16 records the ID of a resultant sample obtained as a result of the experiment. The resultant sample ID may also be read by the reader 17, for example.

In Step ST8, the analysis data recording unit 22 records analysis data obtained from the analyzer 23. The analysis data is associated with the resultant sample ID of the analyzed resultant sample.

In Step ST9, the thus obtained experimental data receives anti-tampering processing executed by the anti-tampering unit 33. In the subsequent Step ST10, the experimental data housing unit 25 stores the tampering-proofed experimental data in the experimental data storage device 26. The experimental data that is associated with a protocol ID and tampering-proofed is automatically recorded in this manner.

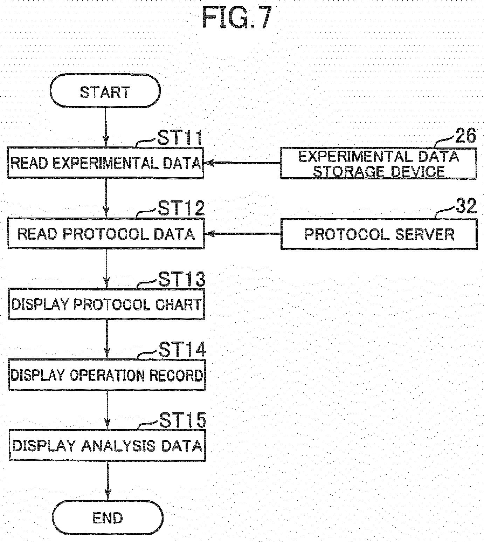

FIG. 7 is a flow chart for illustrating the operation of the experimental data recording device 1 that is executed to display experimental data superimposed on a protocol chart. This flow is given as an example, and not all of the operation steps illustrated in FIG. 7 are required to be executed.

In Step ST11, experimental data to be displayed is first read from the experimental data storage device 26, and is stored in the experimental data storage unit 11. This step is unnecessary when experimental data to be displayed is already stored.

In the subsequent Step ST12, protocol data having a protocol ID that is associated with the experimental data is downloaded from the protocol server 32 and is stored in the protocol data storage unit 10. Each protocol ID is an ID uniquely assigned to a protocol, and thus the correct protocol used when the experimental data has been obtained is downloaded based on the protocol ID. This step is unnecessary when protocol data is included in the experimental data.

In Step ST13, the protocol display unit 28 displays a protocol chart. In the subsequent Step ST14, the operation record display unit 29 displays operation records in association with symbols that represent procedures in the protocol chart. In Step ST15, analysis data is further displayed by the analysis data display unit 30. The result displayed in this manner is as illustrated in the example of FIG. 5.

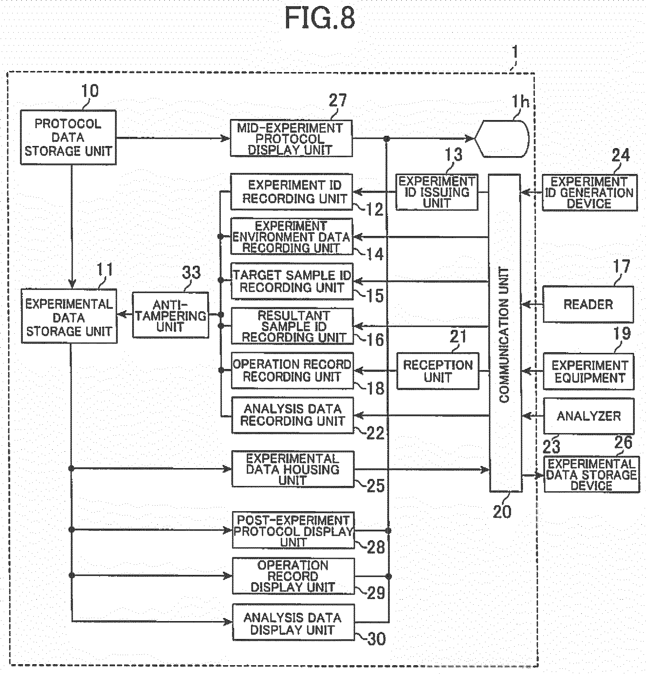

The description given above deals with an example in which the anti-tampering unit 33 performs anti-tampering processing when the experimental data housing unit 25 stores, in the experimental data storage device, experimental data stored in the experimental data storage unit. In a modification example of this embodiment, the anti-tampering processing is enhanced from this example. FIG. 8 is a function block diagram of the experimental data recording device 1 according to the modification example.

In the experimental data recording device 1 according to the modification example, the anti-tampering unit 33 is interposed between the recording units included in the experimental data recording device 1, here, between the experimental data storage unit 11 and the experiment ID recording unit 12, the experiment environment data recording unit 14, the target sample ID recording unit 15, the resultant sample ID recording unit 16, the operation record recording unit 18, and the analysis data recording unit 22, instead of between the experimental data housing unit 25 and the communication unit 20. Anti-tampering processing is executed each time the recording units record various types of information.

This means that anti-tampering processing is performed also on experimental data that is at the stage of storage in the experimental data storage unit 11 prior to storage in the experimental data storage device 26. It is therefore very difficult to tamper with experimental data that has not received anti-tampering processing.

The anti-tampering processing by the anti-tampering unit 33 in this modification example does not always need to be performed on various types of information recorded by all of the recording units included in the experimental data recording device 1, and may be performed only on information that is deemed as one requiring anti-tampering. For example, anti-tampering processing may be performed at least each time the operation record recording unit 18 records an operation record.

The experimental data recording device 1 according to the embodiment described above executes the operation of displaying experimental data superimposed on a protocol chart in addition to recording. However, according to the viewpoints of the inventors of the present invention, not only experimenters but also the third party who wishes to verify and consult an experiment result demands to view experimental data along with a protocol. When it can be confirmed that an experiment result to be viewed has actually be obtained by conducting the experiment as the protocol dictates, and that the experiment result is authenticate and is guaranteed in objectivity and accuracy, possible advantages including the saving of immense time and labor necessary to verify the result are great for the third party.

For that reason, the inventors of the present invention have invented an experimental data display device 2 configured to display experimental data in association with a protocol with objectivity and high reliability, along with the experimental data recording device 1. The experimental data display device 2 is described below.

The physical configuration of the experimental data display device 2 is the same as that of the experimental data recording device 1, and repetitive descriptions are therefore omitted by referring to FIG. 1. The experimental data display device 2 is similar to the experimental data recording device 1 also in that the experimental data display device 2 is implemented by running on a general computer a program that causes the computer to operate as the experimental data display device 2.

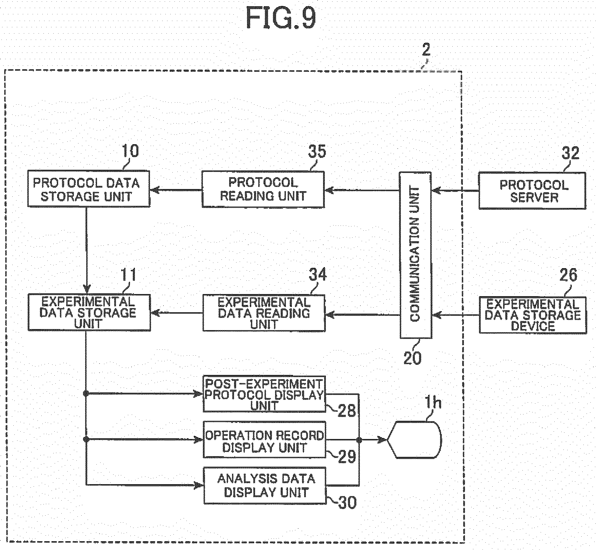

FIG. 9 is a function block diagram of the experimental data recording device 2. The experimental data display device 2 includes configurations common to the experimental data recording device 1 in terms of function. Function blocks in FIG. 9 that are the same as the ones in FIG. 2, which is an illustration of the experimental data recording device 1, are therefore denoted by the same reference symbols, and repetitive descriptions are omitted.

An experiment data reading unit 34 is configured to read, via the communication unit 20, experimental data to be displayed from the experimental data storage device 26, and to store the read data in the experimental data storage unit 11. A protocol data reading unit 35 is configured to read, from the protocol server 32, protocol data that has a protocol ID associated with the read experimental data, and to store the read protocol data in the protocol data storage unit 10.

The post-experiment protocol display unit 28, the operation record display unit 29, and the analysis data display unit 30 operate the same way as those of the experimental data recording device 1 described above. The experimental data display device 2 operates the same way as that described with reference to FIG. 7.

In this manner, protocol data is identified and read based on operation data that is associated with a protocol ID, and the operation data is displayed superimposed on a protocol chart, along with analysis data. Experimental data can consequently be displayed in association with a protocol with objectivity and high reliability.

Each of the configurations in the embodiment above is described as a specific example, and the invention disclosed in the present application is not intended to be limited to those specific configurations themselves. Various modifications may be made by a person skilled in the art to the disclosed embodiment. Further, the control illustrated in the disclosed flowcharts may also be appropriately replaced by one having equivalent functions. It should be understood that the technical scope of the invention disclosed in the present application cover all such modifications .

## Claims

1. An experimental data recording device, configured to record experimental data, which is a record of an experiment based on a protocol in at least one of a biochemistry field or a biotechnology field, the experimental data recording device comprising:
a reception unit configured to receive operation records of pieces of experiment equipment;
an experiment ID recording unit configured to record an experiment ID, which is an ID unique to an experiment, in association with a protocol ID unique to a protocol; and
an operation record recording unit configured to record each of the received operation records in association with a corresponding procedure out of a plurality of procedures included in the protocol.

2. The experimental data recording device according to claim 1, further comprising:
a target sample ID recording unit configured to record a target sample ID, which is an ID of a sample for which the experiment is conducted, in association with the experiment ID; and
a resultant sample ID recording unit configured to record a resultant sample ID, which is an ID of a sample obtained as a result of the experiment, in association with the experiment ID.

3. The experimental data recording device according to claim 1 or 2, further comprising:
an experiment environment data recording unit configured to record experiment environment data in association with the experiment ID.

4. The experimental data recording device according to any one of claims 1 to 3, wherein the pieces of experiment equipment comprise equipment operated directly by an experimenter.

5. The experimental data recording device according to claim 4, wherein the pieces of experiment equipment comprise an electronic pipette.

6. The experimental data recording device according to claim 4 or 5, further comprising:
a mid-experiment protocol display unit configured to display the protocol relevant to the experiment on a monitor during the experiment.

7. The experimental data recording device according to any one of claims 1 to 3, wherein the pieces of experiment equipment comprise a robot configured to conduct the experiment based on the protocol.

8. The experimental data recording device according to any one of claims 1 to 7, further comprising:
an experiment ID issuing unit configured to issue the experiment ID for each experiment.

9. The experimental data recording device according to claim 8, wherein the experiment ID issuing unit is configured to obtain an experiment ID that is generated by an external experiment ID generation device.

10. The experimental data recording device according to any one of claims 1 to 9, further comprising:
an anti-tampering unit configured to perform anti-tampering processing on the experimental data.

11. The experimental data recording device according to claim 10, wherein the anti-tampering unit is configured to perform the anti-tampering processing at least each time the operation record recording unit records an operation record.

12. The experimental data recording device according to any one of claims 1 to 10, further comprising:
an experimental data housing unit configured to store the obtained experimental data in an external experimental data storage device.

13. The experimental data recording device according to any one of claims 1 to 12, further comprising:
an analysis data recording unit configured to record analysis data, which is data about a result of analysis performed on a sample that is obtained as a result of the experiment, in association with a resultant sample ID of the obtained sample.

14. The experimental data recording device according to any one of claims 1 to 13, further comprising:
a post-experiment protocol display unit configured to display a protocol that is used in the experiment; and
an operation record display unit configured to display each operation record included in the experimental data that is associated with the protocol, in association with one of procedures included in the protocol.

15. A computer program for causing a computer to function as the experimental data recording device of any one of claims 1 to 14.

16. Experimental data, which is a record of an experiment based on a protocol in at least one of a biochemistry field or a biotechnology field, the experimental data comprising:
an experiment ID, which is an ID unique to an experiment and which is associated with a protocol ID unique to a protocol; and
operation records of pieces of experiment equipment, each of the operation records being associated with a corresponding procedure out of procedures included in the protocol.

17. An experimental data recording method for recording experimental data, which is a record of an experiment based on a protocol in at least one of a biochemistry field or a biotechnology field, the experimental data recording method comprising:
receiving operation records of pieces of experiment equipment;
recording an experiment ID, which is an ID unique to an experiment, in association with a protocol ID unique to a protocol; and
recording each of the received operation records in association with a corresponding procedure out of a plurality of procedures included in the protocol.

18. An experimental data display device, configured to display experimental data, which is a record of an experiment based on a protocol in at least one of a biochemistry field or a biotechnology field, the experimental data display device comprising:
a post-experiment protocol display unit configured to display a protocol that is used in the experiment; and
an operation record display unit configured to display each operation record included in the experimental data that is associated with the protocol, in association with one of procedures included in the protocol, the operation record being about experiment equipment used in the experiment.

19. The experimental data display device according to claim 18, further comprising:
an analysis data display unit configured to display analysis data that is associated with the experimental data.

20. An experimental data display method for displaying experimental data, which is a record of an experiment based on a protocol in at least one of a biochemistry fieldor a biotechnology field, the experimental data display method comprising:
displaying a protocol that is used in the experiment; and
displaying each operation record included in the experimental data that is associated with the protocol, in association with one of procedures included in the protocol, the operation record being about experiment equipment used in the experiment.
